# EUROPEAN PATENT APPLICATION

(11) **EP 4 464 489 A2**
(43) Date of publication of application: **20.11.2024**
(21) Application number: 24172010.1
(22) Date of filing: 23.04.2024
(51) Int. Cl.: B29C 33/02, B29C 35/00, C04B 35/83

(54) **HEAT TREATMENT TOOLING FIXTURE TEMPERATURE CONTROL SYSTEMS AND METHODS**

(30) Priority: 25.04.2023 US 202318306876
(71) Applicant: Rohr, Inc., Chula Vista, CA 91910-2098 (US)
(72) Inventor: WAUGH, Katherine E., San Diego (US); PUJAR, Vijay V., San Diego (US); LAYMAN, Ronald Curtis, Tucson (US); KOROLY, Christopher C., Spring Valley (US); LEMANSKI, Joseph R., Chula Vista (US); NEWTON, Kirk Christopher, Vail (US)
(74) Representative: Dehns

(57) **Abstract**

Systems and methods for controlling exotherms in a fibrous preform (110) during carbonization include one or more temperature control channels (130, 132) disposed in a heat treatment tooling fixture (100). A fluid may be moved through the temperature control channel(s) for controlling a temperature of the fibrous preform as the fibrous preform is heated during carbonization. A fluid source (140) and a valve arrangement may be controlled for regulating a flow of fluid through the temperature control channel(s). In this manner, the fibrous preform may be uniformly brought to a temperature range such that shrinking of the fibrous preform occurs simultaneously and uniformly throughout the fibrous preform.

## Description

### TECHNICAL FIELD

The present disclosure relates to carbon/carbon composites, and more specifically, to systems and methods for manufacturing carbon/carbon (C/C) composites.

### BACKGROUND

Composite bodies are utilized in various industries, including the aerospace industry. C/C composites may be produced utilizing oxidized polyacrylonitrile (PAN) fiber-based preforms followed by heat treatment and chemical vapor infiltration (CVI) densification. During the heat-treatment process, the preform is heated to remove the non-carbon chemical species from the preform, thereby converting the OPF to carbon.

### SUMMARY

According to various embodiments, a heat treatment tooling fixture arrangement is disclosed, comprising, a heat treatment tooling fixture configured to receive a fibrous preform, a first temperature control channel disposed in the heat treatment tooling fixture and configured to receive a first fluid for regulating a first temperature of the fibrous preform, a first temperature sensor configured to measure an inlet temperature of the first fluid entering the first temperature control channel, a second temperature sensor configured to measure an exit temperature of the first fluid exiting the first temperature control channel, and a controller configured to receive a first signal from the first temperature sensor and a second signal from the second temperature sensor, wherein the first signal corresponds to the inlet temperature of the first fluid entering the first temperature control channel and the second signal corresponds to the exit temperature of the fluid exiting the first temperature control channel. The controller is configured to monitor the first signal and the second signal for regulating a flow rate of the first fluid and/or a temperature of the first fluid.

In various embodiments, the first fluid comprises an inert gas.

In various embodiments, the heat treatment tooling fixture arrangement further comprises a second temperature control channel disposed in the heat treatment tooling fixture and configured to receive a second fluid for regulating a second temperature of the heat treatment tooling fixture.

In various embodiments, the heat treatment tooling fixture arrangement further comprises a third temperature sensor configured to measure an exit temperature of the second fluid exiting the second temperature control channel.

In various embodiments, the controller is configured to calculate a difference between the exit temperature of the first fluid exiting the first temperature control channel and the exit temperature of the second fluid exiting the second temperature control channel. Based upon the difference, regulate the at least one of the flow rate of the first fluid or the temperature of the first fluid.

In various embodiments, the heat treatment tooling fixture comprises a male die and a female die.

According to another aspect of the invention a method for controlling exotherms during a carbonization process of a fibrous preform is disclosed. In accordance with various embodiments, the method comprises positioning the fibrous preform in a heat treatment tooling fixture, heating the fibrous preform in a furnace while the fibrous preform is positioned in the heat treatment tooling fixture, moving a first fluid through a first temperature control channel disposed in the heat treatment tooling fixture, moving a second fluid through a second temperature control channel disposed in the heat treatment tooling fixture, measuring a first outlet temperature of the first fluid, measuring a second outlet temperature of the second fluid, and varying at least one of a flow rate or a temperature of the first fluid based on the first outlet temperature and the second outlet temperature.

In various embodiments, the fibrous preform comprises an oxidized PAN fiber material.

In various embodiments, the fibrous preform is heated to an elevated temperature. In various embodiments, a primary exotherm can occur at a first temperature and a secondary exotherm can occur at a second temperature.

In various embodiments, the method further comprises measuring an inlet temperature of the first fluid, calculating a first difference between the first outlet temperature and the inlet temperature, calculating a second difference between the second outlet temperature and the inlet temperature, comparing the first difference with the second difference, and varying the at least one of the flow rate or the temperature of the first fluid based upon the comparison.

In various embodiments, varying the flow rate of the first fluid comprises sending a position command signal to a valve.

In various embodiments, varying the temperature of the first fluid comprises sending a temperature command signal to a heater.

According to various embodiments, a heat treatment tooling fixture arrangement is disclosed, comprising a female forming tool, a first plug, and a wedge. The female forming tool comprises a die recess, the female forming tool extends longitudinally along a longitudinal centerline of the female forming tool between and to a first end of the female forming tool and a second end of the female forming tool, and the female forming tool extends laterally between and to a first side of the female forming tool and a second side of the female forming tool. The first plug is configured to be received by the die recess. The first plug comprises a first angled surface. The wedge is configured to be received by the die recess, the wedge extends longitudinally along a longitudinal centerline of the wedge between and to a first end of the wedge and a second end of the wedge, the wedge extends laterally between and to a first side of the wedge and a second side of the wedge, the first side of the wedge comprises a first tapered surface. The first tapered surface of the wedge is configured to engage the first angled surface of the first plug. The first angled surface comprises a first channel extending longitudinally therethrough and the first tapered surface comprises a second channel extending longitudinally therethrough. In response to the wedge moving to a first position with respect to the first plug, the first channel and the second channel form a first temperature control channel defining a first fluid flow path comprising a first surface area. In response to the wedge moving to a second position with respect to the first plug, the first channel and the second channel form a second temperature control channel defining a second fluid flow path comprising a second surface area different from the first surface area.

In various embodiments, the wedge moves vertically with respect to the first plug when the wedge moves from the first position to the second position.

In various embodiments, in response to the wedge moving from the first position to the second position, the first plug is configured to move laterally toward the first side of the female forming tool.

In various embodiments, the heat treatment tooling fixture arrangement further comprises a second plug configured to be received by the die recess, the second plug comprising a second angled surface, wherein the second side of the wedge comprises a second tapered surface. The second tapered surface of the wedge is configured to engage the second angled surface of the second plug. In response to the wedge moving from the first position to the second position, the second plug is configured to move laterally toward the second side of the female forming tool.

In various embodiments, the second surface area is less than the first surface area.

In various embodiments, the first temperature control channel extends between and to a first end of the first plug and a second end of the first plug.

In various embodiments, the second temperature control channel extends between and to the first end of the wedge and the second end of the wedge.

In various embodiments, the heat treatment tooling fixture arrangement further comprises a temperature control channel disposed in the female forming tool, the temperature control channel configured to receive a fluid during a carbonization process.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a schematic illustration of a heat treatment tooling fixture arrangement, in accordance with various embodiments;
FIG. 2 is a schematic illustration of a heat treatment tooling fixture arrangement during carbonization with temperature control channels receiving associated flows of a fluid for controlling exotherms in the fibrous preform, in accordance with various embodiments;
FIG. 3 is a flow diagram of a method for controlling exotherms in a fibrous preform during a carbonization process, in accordance with various embodiments;
FIG. 4A is a schematic sectional illustration of a heat treatment tooling fixture with its wedge applying compression forces to its first and second plugs (in a closed or partially closed position) and comprising temperature control channels disposed therein for controlling exotherms in the fibrous preform, in accordance with various embodiments;
FIG. 4B is a schematic sectional illustration of the system of FIG. 4A with its wedge moved with respect to the first and second plugs to compress the fibrous preform (in a closed position), in accordance with various embodiments;
FIG. 5 is a perspective illustration of a wedge including a plurality of channels for defining, together with the channels in the plug, temperature control channels in the heat treatment tooling fixture, in accordance with various embodiments;
FIG. 6 is a perspective illustration of a plug including a plurality of channels for defining, together with the channels in the wedge, temperature control channels in the heat treatment tooling fixture, in accordance with various embodiments;
FIG. 7 is a perspective illustration of a female forming tool (a female die) including a plurality of temperature control channels extending therethrough, in accordance with various embodiments;
FIG. 8 is a perspective illustration of a female forming tool (a female die) including a plurality of temperature control channels disposed on an outer surface thereof, in accordance with various embodiments;
FIG. 9A is a perspective illustration of a heat treatment tooling fixture arrangement with a plurality of temperature control channels disposed in the female forming tool, in accordance with various embodiments;
FIG. 9B is a perspective illustration of a heat treatment tooling fixture arrangement with a plurality of temperature control channels extending through a bottom surface of the female forming tool, in accordance with various embodiments;
FIG. 9C is a section illustration of a temperature control channel extending through the female forming tool and in fluid communication with the fibrous preform, in accordance with various embodiments;
FIG. 10 is a flow diagram of a method for controlling exotherms in a fibrous preform during a carbonization process, in accordance with various embodiments;
FIG. 11A is a schematic illustration of an active exotherm control arrangement for a fixed die (e.g., a female die) of a heat treatment tooling fixture arrangement, in accordance with various embodiments; and
FIG. 11B is a schematic illustration of an active exotherm control arrangement for a moveable die (e.g., a male die) of a heat treatment tooling fixture arrangement, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

As used herein, "fiber volume ratio" means the ratio of the volume of the fibers of the fibrous preform to the total volume of the fibrous preform. For example, a fiber volume ratio of 25% means the volume of the fibers in the fibrous preform is 25% of the total volume of fibrous preform.

As used herein, the term "fiber density" is used with its common technical meaning with units of g/cm³ or g/cc. The fiber density may refer specifically to that of the individual fibers in the fibrous preform. The density will be measured, unless otherwise noted, by taking the weight divided by the geometric volume of each fiber. The density may refer to an average density of a plurality of fibers included in a fibrous preform.

As used herein, "CVI/CVD" may refer to chemical vapor infiltration and/or chemical vapor deposition. Accordingly, CVI/CVD may refer to chemical vapor infiltration or deposition or both.

As used herein, where values and ranges are defined, for temperature and time, the term "about" means +/- 100°C and +/- 24 hours.

In general, there are several methods of manufacturing carbon/carbon ("C/C") materials depending on the part geometries and the end application performance requirements. In some of these methods, the process involves starting with a dry fibrous preform comprised of oxidized polyacrylonitrile (PAN) fiber, or OPF, followed by carbonization to convert the OPF into carbon fibers to produce a carbon fiber preform. This is subsequently followed by densification, wherein the spaces between the fibers in the preform are filled via resin infiltration and pyrolysis and/or chemical vapor infiltration to produce a carbon-fiber reinforced carbon matrix composite, or C/C composite material.

In the foregoing, the OPF used in the fibrous preforms is derived from polyacrylonitrile (PAN) fiber. The PAN fiber is heated in a furnace with a controlled temperature and controlled oxidizing environment by a process called thermal stabilization or oxidation at elevated temperatures. During this process, the polyacrylonitrile linear polymer chains in the PAN fiber undergo conversion to form thermally stable polymer with a ladder structure. During the stabilization process, the polyacrylonitrile polymer molecules undergo a series of complex changes in chemistry, including cyclization of the nitrile groups, cross linking of the chain molecules, dehydrogenation and oxidation. As a result of these changes, volatile byproducts are formed that include water, CO and HCN. Most importantly, the changes to the polymer structure stabilize the fibers and prevent melting during the subsequent heat-treatment or carbonization process. The stabilized fiber is referred to as oxidized polyacrylonitrile fiber, or OPF. The resulting OPF typically comprises of about 45 - 70% carbon, with the balance comprising a mixture of hydrogen, nitrogen and oxygen.

During the stabilization or oxidation process, the temperatures, the temperature ramp rates, the tension force or amount of stretch on the fiber, the oxygen gas flow rates, and the total amount of time are all carefully controlled, as these have a direct impact on the quality and nature of the resulting OPF, including the resulting polymer structure, the degree of cyclization and oxidation, the overall composition of the fiber, and the radial variation of composition within the fiber, among others. There are several studies on the effect of the thermal stabilization parameters on the structure and properties of the OPF and its subsequent effect on the properties of the carbon fiber when it is converted to carbon fiber - for example, see Nunna, et al., Materials (2019) or Lee, et al., Advances in Chemical Engineering and Science (2012), or Fitzer, et al., Carbon (1986).

While thermal treatment in an oxidizing environment is one of the most common methods for forming oxidized PAN fiber, it should be understood that the present disclosure may be applied to OPF fibers obtained using other methods, such as electron beam, X-ray, gamma ray, ultraviolet, infrared, plasma treatments, or the like including combination of one or more of these treatment methods. As used herein, the term "OPF" refers to oxidized polyacrylonitrile (PAN) fiber, and may be used interchangeably with stabilized polyacrylonitrile (PAN) fiber, and may be derived from PAN fiber by any of the treatment methods or combinations thereof.

The OPF preform is then heat-treated in a furnace with a carefully controlled inert atmosphere and a controlled temperature ramp rate to convert the OPF to carbon fiber. As is well-understood, the heat of the furnace causes a chemical conversion which drives off the non-carbon chemical species from the preform leaving behind carbon. The atmosphere and temperature ramp rate during the heat-treatment process are designed to retain the fibrous structure, and achieve desired levels of fiber strength and modulus, among others. The carbon fiber formed after this heat-treatment process typically comprises 85-100% carbon. Since the heat-treatment results in the conversion of OPF to carbon fiber, the process is referred to as carbonization. As used herein, with reference to OPF, the term heat-treatment or carbonization refer to the process of converting the OPF to carbon fiber, and may be used interchangeably and has the same meaning.

After the preform has been heat-treated or carbonized, the preform is densified to produce carbon-carbon composite. In general, densification involves filling the voids, or pores, of the fibrous preform with additional carbon material. This may be done using the same furnace used for carbonization or a different furnace. Chemical vapor infiltration and deposition ("CVI/CVD") techniques are one of the methods used to densify the porous fibrous preform with a carbon matrix. CVI/CVD techniques commonly involve heating the carbonized preforms in the furnace, and flowing hydrocarbon gases into the furnace allowing these gases to flow around and through the fibrous preforms. The carbonized preforms may be fixtured in a CVI tooling fixture, wherein the fixture comprises of graphite or a composite and is configured with holes to allow gases to flow through the fixture and fibrous preform. The CVI fixture is designed to help the fibrous preform maintain its shape during the CVI preform, and also to control the rate and uniformity of infiltration through the preform. During the CVI process, carbon from the hydrocarbon gases is deposited on and within the fibrous preforms as a result of a reaction during the chemical vapor infiltration process. When the densification step is completed, the resulting C/C part has a carbon fiber structure with a carbon matrix filling the voids between the fibrous filaments in the fiber structure, thereby deriving the name "carbon/carbon."

During the heat-treatment process, and more particularly, as the oxidized PAN fibers are converted into carbon fibers, several interrelated changes and processes occur. The non-carbon elements in the OPF, including oxygen, nitrogen and hydrogen dissociate from the OPF and emerge from the fiber as volatile byproducts mostly in the form of water, ammonia, HCN, CO and nitrogen. The dissociation and formation of some of these byproducts is accompanied by reaction heat, or an exotherm. As the OPF is converting to carbon and producing volatile byproducts, there is also an associated shrinkage of the fibers and the overall fibrous preform, as well as a reduction in the overall weight of the fibrous preform. While the exact nature and extent of all these changes and processes can vary depending on the chemistry and degree of stabilization of the OPF, it is typical for the OPF to exhibit linear shrinkage of 5-20% and weight reduction of 30-60% as the OPF converts to carbon fiber. Stated differently, as the temperature is increased during heat-treatment, exothermic reactions occur in the OPF fibers as they are converted into carbon fibers. This conversion is further linked to shrinkage of the OPF fibers as they are converted into carbon and evolution of volatile byproducts that need to be driven away from the preform.

In the foregoing, since the exothermic reactions are triggered by temperature of the preform, uneven temperatures can result in uneven occurrence of the exotherms within the preform. Stated differently, as the temperature of the furnace is increased, the preform temperature may not increase evenly throughout the preform. As a result, an exotherm can occur in only certain regions within the preform. Since the exotherm releases heat, these preform regions may become hotter locally exacerbating the unevenness in temperatures within the preform. Since there are associated shrinkage of the fibers as a result of these reactions, the uneven exothermic reactions throughout the OPF preform tends to lead to uneven shrinking. Therefore, certain regions of the preform may be shrinking as a result of the conversion, while other regions remain unreacted and stay intact. The uneven shrinking imposes differential thermal and mechanical stresses on the fibrous preform and may result in undesirable wrinkling of the fibers and distortion in one or more regions of the preform. These undesirable wrinkling and distortions often do not get corrected or reversed after all the oxidized PAN fibers eventually convert to carbon fiber during the carbonization process. Moreover, it becomes difficult, if not impossible, to control the distortions imposed by the uneven occurrence of exotherms and associated stresses on the preform. In this regard, it is desirable to monitor and control the temperatures in the OPF preform during the carbonization process so as to control exothermic reactions and the associated temperature spikes evenly throughout the OPF preform (i.e., in all three dimensions of the preform) so as to cause the entire OPF preform to simultaneously (or nearly simultaneously) shrink, thereby preventing unwanted wrinkling and distortions. This is especially desirable during the carbonization of fibrous preform shapes featuring complex geometries and contours in order to maintain the desired shapes within desired tolerance limits.

A heat treatment tooling fixture arrangement of the present disclosure is configured to control the temperature and the temperature increases associated with reaction exotherms in a fibrous preform (e.g., an OPF preform) in a non-metallic (e.g., graphite and/or C/C (graphite/C-C)) tooling assembly during carbonization. A heat treatment tooling fixture arrangement of the present disclosure utilizes temperature control channels formed into the tooling to influence a more uniform temperature and the associated exothermic reactions and shrinkage. The temperature control channels can be formed onto/into any of the tooling surfaces to target uniform heating/cooling across the assembly or to specific areas. As preform shrinkage occurs, the components of the graphite/C-C composite tooling assembly can slide with respect to one another, in accordance with various embodiments. As such, in various embodiments temperature control channels that may be machined into a wedge-plug interface have the ability to open and/or close during the carbonization process, as a middle wedge translates. Temperature control channels tend to be an efficient method to provide exotherm temperature control without any non-graphite/non-carbon-carbon components entering the carbonization furnace. A heat treatment tooling fixture arrangement of the present disclosure tends to address fiber wrinkling/shrinkage observed in present carbonization tooling without temperature control channels. The utilization of temperature control channels tends to provide an easy-to-implement method to provide heating/cooling to the assembly.

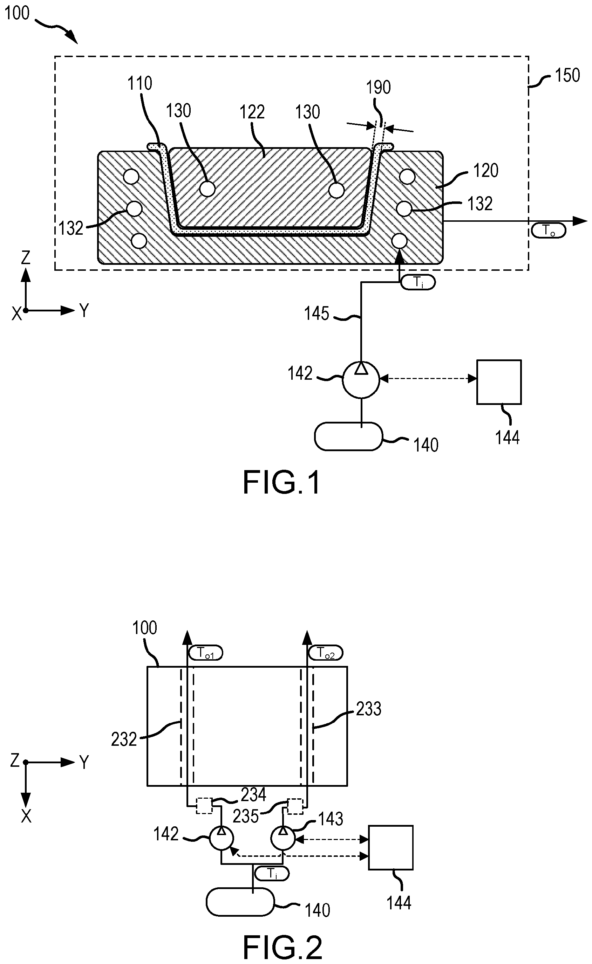

FIG. 1, in accordance with various embodiments, is a schematic illustration of an exemplary heat treatment tooling fixture arrangement 100 of the present disclosure. Heat treatment tooling fixture arrangement 100 includes at least two portions (e.g., a punch or male die 122 and a female die 120) that can be separated into an open position or placed together in a closed configuration. The male die 122 and the female die 120 are paired in such a way that they delimit between them, on their molding surfaces and during the closing of the tooling, a gap 190 corresponding to the final thickness of the part produced. Thus, the space between the male die 122 and the female die 120 defines a cavity wherein the fibrous preform 110 can be located.

In various embodiments, male die 122 and female die 120 are made from a carbon/carbon material or a graphite material suitable for withstanding carbonization temperatures. In various embodiments, male die 122 and female die 120 are made from a metal alloy material suitable for withstanding carbonization temperatures. Male die 122 and female die 120 can be placed in a furnace during the carbonization process. In various embodiments, fibrous preform 110 comprises one or more layers or sheets of an OPF material.

After being shape-formed into a desired shape, the fibrous preform 110 may undergo a carbonization process. The carbonization process may be employed to convert the fibers of the fibrous preform 110 into carbon fibers, as used herein "carbon fibers" means carbon fibers comprised of at least 90% carbon. The carbonization process is distinguished from the densification process described below in that the densification process involves infiltrating the pores of the fibrous preform 110 and depositing a carbon matrix within and around the carbon fibers of the fibrous preform 110, and the carbonization process refers to the process of converting the fibers of the fibrous preform 110 into carbon fibers.

The shape-formed fibrous preform 110 may be carbonized by placing the shape-formed fibrous preform 110 in a furnace (schematically represented by dashed box 150) with an inert atmosphere. The shape-formed fibrous preform 110 may be carbonized with the shape-formed fibrous preform 110 held in compression in the heat treatment tooling fixture arrangement 100 (i.e., the fibrous preform 110 remains in the fixture during carbonization). In general, the carbonization process involves heating the shape-formed fibrous preform 110 in a furnace 150 to a carbonization temperature. In various embodiments, the carbonization temperature may be varied based on the desired strength and modulus of the carbon fiber and the application. An inert atmosphere of nitrogen, argon or a vacuum can be provided in the furnace 150 during the carbonization process. The heat of the furnace 150 causes a chemical conversion of the OPF that converts the fibers to carbon fibers and drives off volatile byproducts. Although it is sometimes preferred that the fibers in the carbonized fiber preform be 100% carbon fiber, it is generally acceptable for a less than full conversion to take place. The resulting carbonized fiber preform generally has the same fibrous structure as the fibrous preform before carbonizing. During carbonization, the total mass and the total fiber volume in each fibrous preform is typically reduced due to the loss of volatile byproducts, including but not limited to water, ammonia, carbon oxides, HCN and nitrogen.

Fiber density of the fibrous preform 110 may increase during carbonization (e.g., from about 1.37 g/cc in OPF state to about 1.77-1.85 g/cc after carbonization, depending on the final carbonization temperature). In various embodiments, the OPF fibers shrink during carbonization, with linear shrinkage in the fibers ranging from 5-20% and weight reduction of 30-60%, or a char/carbon yield of 40-70% by weight. As used herein "char/carbon yield" means the remaining mass of the OPF as it is converted to carbon fiber during the carbonization process.

In various embodiments, during the carbonization process, an exotherm may occur in the OPF fibers at a first temperature range. In this regard, it may be desirable to control a temperature of the fibrous preform 110 such that the fibrous preform 110 is evenly heated and the entire fibrous preform 110 reaches the exotherm temperature range at the same time or substantially the same time to prevent unwanted wrinkling.

In various embodiments, one or more temperature control channels are provided in the heat treatment tooling fixture arrangement 100. For example, temperature control channels 130 may be disposed in male die 122 and/or temperature control channels 132 may be disposed in female die 120. In various embodiments, temperature control channels 130 are apertures extending longitudinally (i.e., along the X-axis) through male die 122. In various embodiments, temperature control channels 132 are apertures extending longitudinally (i.e., along the X-axis) through female die 120.

The heat treatment tooling fixture arrangement 100 may further include a fluid source 140 for containing a fluid, for example a compressed inert gas, such as argon or nitrogen, among others. The fluid can be a compressible fluid or an incompressible fluid. A manifold 145 (e.g., a conduit or the like) defining one or more flow paths and one or more associated valves 142 may be provided for controlling a flow rate of the fluid through the heat treatment tooling fixture arrangement 100. For example, a single valve 142 may control the flow rate of the fluid through all of the temperature control channels 130, 132, or in various embodiments a plurality of valves 142 may be provided for controlling a flow rate of the fluid through different temperature control channels 130 or temperature control channels 132 (e.g., one valve per channel, or one valve per group of channels). In various embodiments, manifold 145 extends from a location external to the furnace 150 to a location internal to the furnace 150 to direct the fluid into one or more temperature control channels 130, 132. The manifold 145 may be formed using one or more pieces and/or connections and may be sealed to furnace 150 to prevent heat generated by furnace 150 from leaking therefrom. Moreover, a connection may be formed between the manifold 145 and the heat treatment tooling fixture (i.e., male die 122 and/or female die 120) to ensure proper fluid flow through the temperature control channel (e.g., temperature control channel(s) 132 and/or temperature control channel(s) 130). A portion of the manifold 145 located within furnace 150 can be made from a C/C or graphite material so as to withstand the carbonization temperatures. In various embodiments, infrastructure for cooling channels 132 can be implemented at the bottom of the furnace 150 where the carbonization tooling assemblies sit on the floor of the furnace 150. In various embodiments, manifold 145 branches into a plurality of manifolds (e.g., pipes, conduits, or the like) or fluid flow paths to direct discrete flows of fluid into different temperature control channels (e.g., one or more temperature control channel(s) 132 and/or one or more temperature control channel(s) 130). In this regard, valve 142 and/or fluid source 140 may be located externally from furnace 150 during the carbonization process.

The heat treatment tooling fixture arrangement 100 may further include a control unit 144, which includes one or more controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. In various embodiments, the control unit 144 controls valve 142. For example, the control unit 144 may control a position of valve 142 to regulate the flow rate of the fluid through heat treatment tooling fixture arrangement 100.

In various embodiments, control unit 144 utilizes temperature feedback of the fluid to determine a flow rate of the fluid through the temperature control channels 130 and/or temperature control channels 132. In various embodiments, control unit 144 receives a first temperature sensor feedback signal corresponding to an inlet temperature Tᵢ of the fluid entering heat treatment tooling fixture arrangement 100 and a second temperature sensor feedback signal corresponding to an outlet temperature Tₒ of the fluid exiting heat treatment tooling fixture arrangement 100. Control unit 144 may determine a difference between the outlet temperature Tₒ and the inlet temperature Tᵢ to determine a flow rate of the fluid.

With reference to FIG. 2, heat treatment tooling fixture arrangement 100 is schematically illustrated having first and second valves 142 and 143 for controlling a flow rate of the fluid through first and second temperature control channels 232 and 233, respectively. Temperature control channel 232 may be disposed in or on male die 122 or female die 120. Temperature control channel 233 may be disposed in or on male die 122 or female die 120. Control unit 144 may determine a first difference between the outlet temperature Tₒ₁ of the first temperature control channel 232 and the inlet temperature Tᵢ and a second difference between the outlet temperature Tₒ₂ of the second temperature control channel 233 and the inlet temperature Tᵢ. Control unit 144 may compare the first difference and the second difference and control a position of valve 142 and/or valve 143 based on this comparison. For example, the first difference being greater than the second difference may be an indication that the temperature of fibrous preform 110 near temperature control channel 232 is greater than the temperature of fibrous preform 110 near temperature control channel 233. In this regard, it may be desirable to increase a flow rate of the fluid through temperature control channel 232 (e.g., by opening valve 142) to decrease a temperature (or decrease a rate of change of temperature) of the fibrous preform 110 near temperature control channel 232 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). In this manner, control unit 144 may ensure that fibrous preform 110 uniformly reaches the exotherm temperature range to eliminate or reduce undesirable wrinkling of the fibrous preform 110.

In various embodiments, a first heater 234 may be provided for controlling a temperature of the fluid through channel 232. In various embodiments, control unit 144 may vary a temperature of fluid through channel 232 based on the temperature feedback signals. For example, continuing with the above example, control unit 144 may decrease a temperature of the fluid through temperature control channel 232 (e.g., by sending a temperature command signal to heater 234 to decrease in temperate) to decrease a temperature (or decrease a rate of change of temperature) of the fibrous preform 110 near temperature control channel 232 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). Similarly, a second heater 235 may be provided for controlling a temperature of the fluid through temperature control channel 233. In various embodiments, and still continuing with the above example, control unit 144 may increase a temperature of the fluid through temperature control channel 233 (e.g., by sending a temperature command signal to heater 235 to increase in temperate) to increase a temperature (or increase a rate of change of temperature) of the fibrous preform 110 near temperature control channel 233 until the temperature of fibrous preform 110 near temperature control channel 232 is the same, or nearly the same, as the temperature of fibrous preform 110 near temperature control channel 233 (e.g., by continuing to monitor the first and second differences until they are equal or nearly equal within a predetermined threshold). Alternatively, or in combination with heaters, temperature of the in-going fluid may be regulated by mixing fluids stored in containers, wherein the first container is at a first temperature and the second container is at a second temperature, and wherein the second temperature is greater than the first, and the temperature of the in-going fluid may be controlled by varying the relative volume ratio of fluids from the first and second container.

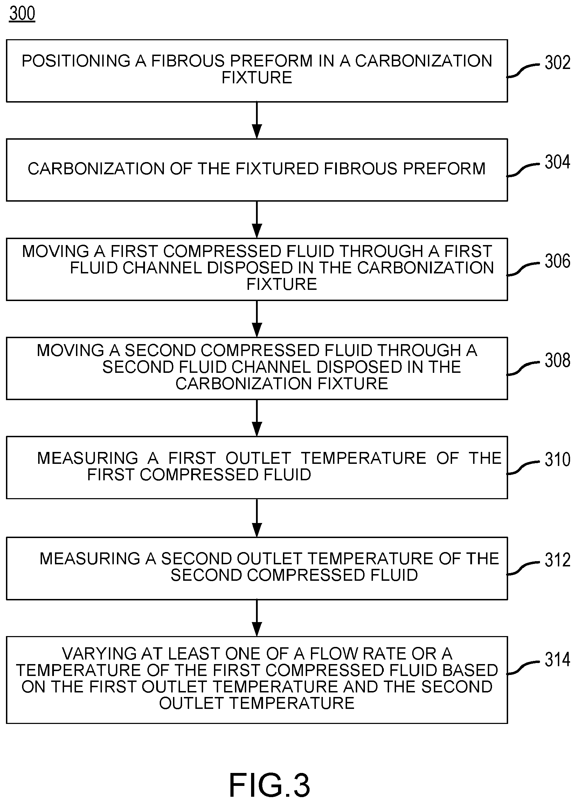

FIG. 3 is a flow chart for a method 300 for controlling exotherms during a carbonization process of a fibrous preform, in accordance with various embodiments. For ease of description, the method 300 is described below with reference to FIG. 1 and FIG. 2. The method 300 of the present disclosure, however, is not limited to use of the exemplary heat treatment tooling fixture arrangement 100 of FIG. 1 and FIG. 2.

In step 302, the fibrous preform 110 is positioned between male die 122 and female die 120 in a compressed position.

In step 304, the fixtured fibrous preform 110 is placed in furnace 150 in preparation for a carbonization process. The furnace 150 is turned on to apply heat to fibrous preform 110. For example, fibrous preform 110 may be heated to a carbonization temperature.

In step 306, valve 142 is opened to move fluid through temperature control channel 232. Valve 142 may be opened using control unit 144. Control unit 144 may vary a flow rate of the fluid by sending a valve position command signal to valve 142.

In step 308, valve 143 is opened to move fluid through temperature control channel 233. Valve 143 may be opened using control unit 144. Control unit 144 may vary a flow rate of the fluid by sending a valve position command signal to valve 143.

In step 310, control unit 144 may receive first outlet temperature Tₒ₁ of the first temperature control channel 232, for example from a temperature sensor. Control unit 144 may further receive inlet temperature Tᵢ, for example from a temperature sensor. Step 310 may further include determining first difference between the outlet temperature Tₒ₁ of the fluid exiting the first temperature control channel 232 and the inlet temperature Tᵢ, in accordance with various embodiments.

In step 312, control unit 144 may receive second outlet temperature Tₒ₂ of the second temperature control channel 233, for example from a temperature sensor. Step 312 may further include determining a second difference between the outlet temperature Tₒ₂ of the fluid exiting the second temperature control channel 233 and the inlet temperature Tᵢ, in accordance with various embodiments. In various embodiments, control unit 144 compares the first difference with the second difference for controlling valve 142, valve 143, heater 234, and/or heater 235. In various embodiments, control unit 144 determines a difference between the outlet temperature Tₒ₂ and the outlet temperature Tₒ₁, wherein the inlet temperature Tᵢ for both temperature control channels 232 and 233 is assumed to be the same, for controlling valve 142, valve 143, heater 234, and/or heater 235.

In step 314, the flow rate of the first fluid through temperature control channel 232 is varied (e.g., by varying a position or state of valve 142) and/or a temperature of the first fluid through temperature control channel 232 is varied (e.g., by adjusting heater 234) based on the first outlet temperature Tₒ₁ and the second outlet temperature Tₒ₂. In various embodiments, step 314 is performed based on the difference between first outlet temperature Tₒ₁ and the second outlet temperature Tₒ₂. In various embodiments, step 314 is performed based on a time or duration during the carbonization cycle (e.g., time in the furnace 150).

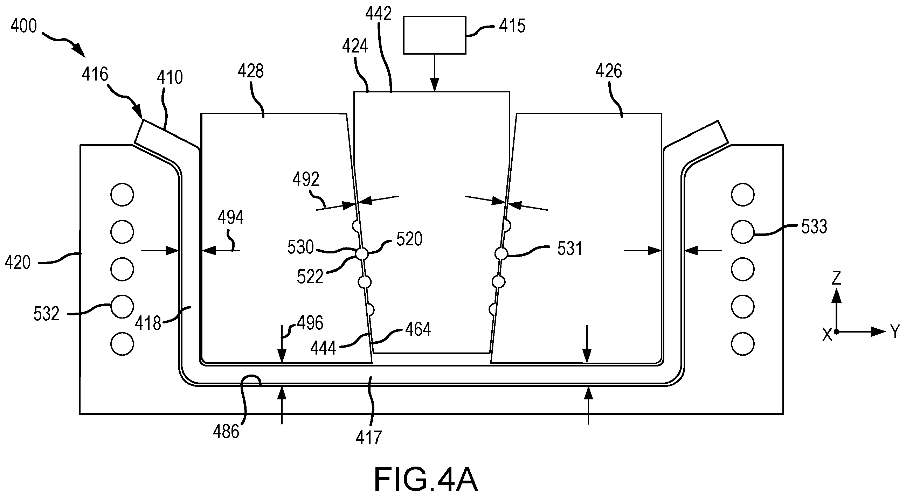

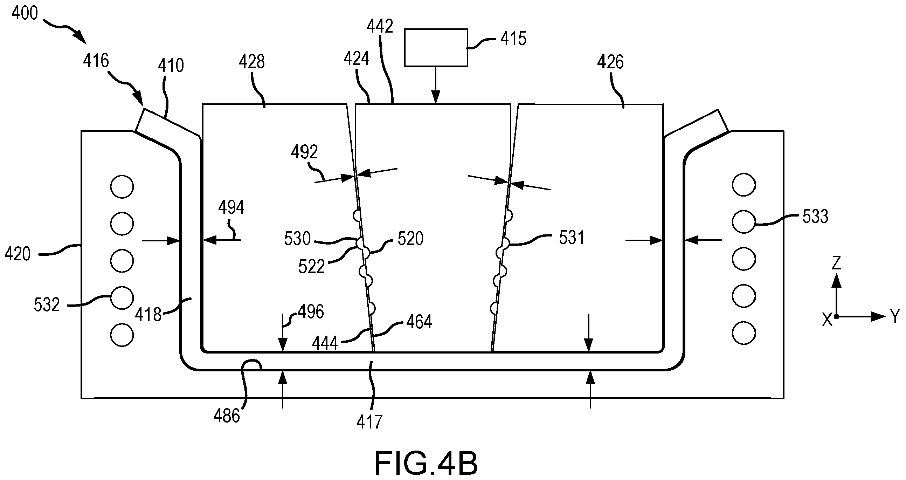

With reference to FIG. 4A and FIG. 4B, a heat treatment tooling fixture arrangement 400 for carbonization compression and shaping a fibrous preform 410 is illustrated, in accordance with various embodiments. Heat treatment tooling fixture arrangement 400 may be configured as a matched die forming tool and/or fixture. In various embodiments, heat treatment tooling fixture arrangement 400 is configured for forming a shaped fibrous preform 410 from a multi-layered preform; e.g., a stack of a plurality of layers of material. Heat treatment tooling fixture arrangement 400 may include a multi-component wedge-based press fixture comprising a female forming tool 420 and a multi-piece wedge and plug arrangement comprising a wedge 424, a first plug 426, and a second plug 428. The wedge 424, first plug 426, and second plug 428 are moveable with respect to the female forming tool 420 to compress the fibrous preform 410 therebetween, thereby shaping (or maintaining a shape of) and compressing the fibrous preform 410. This wedge-and-plug tooling design allows the heat treatment tooling fixture arrangement 400 to have enough flexibility to maintain pressure application on the side walls of the fibrous preform 410 as the thickness of the material decreases during the pre-carbonization compression process. In various embodiments, the design may utilize angled flanges to keep the wedges and plugs aligned together as the tooling pushes down on the fibrous preform 410 and into the female forming tool 420. In various embodiments, female forming tool 420, wedge 424, first plug 426, and second plug 428 are made from a composite material (e.g., a graphite or C/C composite).

In various embodiments, heat treatment tooling fixture arrangement 400 includes one or more temperature control channels (e.g., temperature control channels 530 disposed on second plug 428 and wedge 424, temperature control channels 531 disposed on first plug 426 and wedge 424, temperature control channels 532 disposed in female forming tool 420, and/or temperature control channels disposed in female forming tool 420). In various embodiments, temperature control channels 530, 531, 532, and 533 are similar to temperature control channels 130, 132 and temperature control channels 232, 233 described with respect to FIG. 1 and FIG. 2, respectively.

Fibrous preform 410 may comprise polyacrylonitrile (PAN) or OPF fibers extending in three directions and leaving a plurality of pores or open spaces and may be prepared for shape-forming, compression, and carbonization. In various embodiments, fibrous preform 410 is formed by stacking layers of PAN or OPF fibers and superimposing the layers (e.g., by stacking sheets of fabric). Fibrous preform 410 may undergo a through thickness reinforcement process (e.g., Z-needling, tufting, and/or stitching). Z-needling refers to a process comprising penetrating a composite material (e.g., fibrous preform 410) with needles and moving (e.g., by pulling or pushing) fibers from the in-plane direction and forcing them into the Z direction, where the "Z direction" as used herein refers to a direction perpendicular to the in-plane direction. For preforms having curved surfaces, the "Z-direction" refers to the direction normal to a (local) surface of the fibrous preform at the point where the preform is being needled (i.e., a direction normal to the tangent plane to the surface at the point of needling). In general, the through thickness reinforcement process has the effect of interlocking individual fabric layers together. Thus, after through thickness reinforcement, the fibrous material has fibers extending in three different directions (i.e., in the X and Y directions in the plane of the fibrous layers and the Z direction perpendicular to the fibrous layers). Through thickness reinforcement of the fibrous preform 410 may be done as one or more layers are added to the stack or may be done after the entire stack of layers is formed. The needles may also penetrate through only a portion of fibrous preform 410, or may penetrate through the entire fibrous preform 410. In addition, resins may be added, in various embodiments, to fibrous preform 410 by either injecting the resin into the preform following construction or coating the fibers or layers prior to forming the fibrous preform 410. The through thickness reinforcement process may take into account needling parameters optimized to maintain fiber orientation, minimize in-plane fiber damage, and maintain target interlaminar properties.

After through thickness reinforcement, the fibrous preform 410 may be both compressed to higher fiber volume ratio and formed to shape in a shape-forming process (e.g., using the composite fixture of the present disclosure, or another similarly shaped shape forming tool). It should be understood, moreover, that fibrous preforms 410 not subject to through thickness reinforcement prior to pre-carbonization compression are also within the scope of the present disclosure.

In various embodiments, wedge 424, first plug 426, and/or second plug 428 may be arranged in one or more arrays longitudinally disposed adjacent from each neighboring wedge 424, first plug 426, and/or second plug 428, respectively, in the same array. For example, the wedge 424 may comprise a first wedge sub-unit and a second wedge sub-unit. The first plug 426 may comprise a first plug sub-unit and a second plug sub-unit. The second plug 428 may comprise a third plug sub-unit and a fourth plug sub-unit. In various embodiments, the sub-units of an array (e.g., wedge sub-units, first plug sub-units, and/or second plug sub-units) may be interlocked with one another using tongue and groove joints, or the like, to maintain alignment of adjacent sub-units and even compression along the longitudinal length of the fibrous preform 410. In various embodiments, each sub-unit may comprise a different geometry to conform to the geometry of the female forming tool 420. Moreover, by providing a plurality of sub-units, each sub-unit may be separately installed, which may increase ease of installation for longitudinally lengthy arrays (as opposed to installing a single, more lengthy unit).

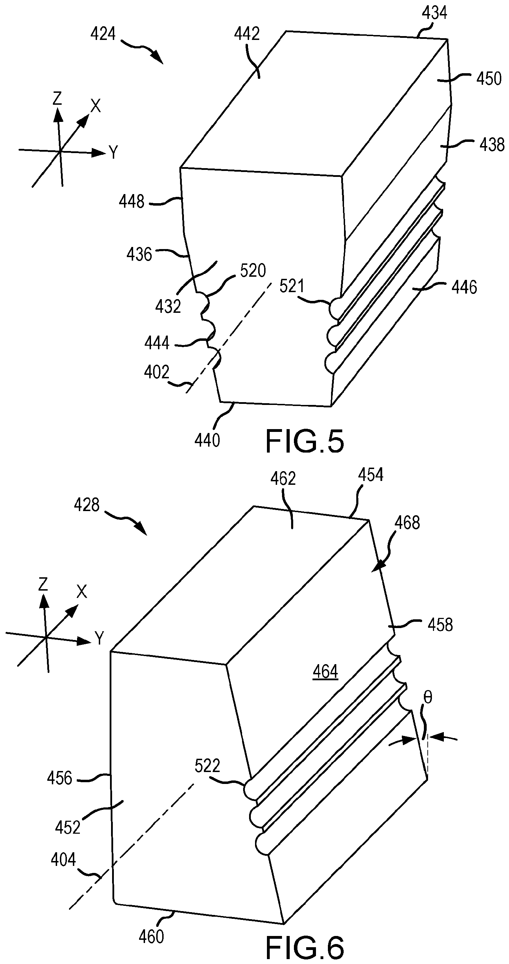

With reference to FIG. 5, the wedge 424 extends longitudinally along a longitudinal centerline 402 of the wedge 424 (e.g., along an X-axis) between and to a first end 432 of the wedge 424 and a second end 434 of the wedge 424. The wedge 424 extends laterally (e.g., along a Y-axis) between and to a first side 436 of the wedge 424 and a second side 438 of the wedge 424. The wedge 424 extends vertically (e.g., along a Z-axis) between and to a bottom side 440 of the wedge 424 and a top side 442 of the wedge 424.

The wedge 424 is configured with a wedge-shaped geometry; e.g., the first side 436 comprises a first angled surface 444 (also referred to herein as a first tapered surface) and the second side 438 comprises a second angled surface 446 (also referred to herein as a second tapered surface) such that the wedge 424 is tapered toward the bottom side 440. In various embodiments, the first side 436 further comprises a first vertical surface 448 and the second side 438 comprises a second vertical surface 450 such that the wedge 424. The first angled surface 444 may intersect with the first vertical surface 448 at a horizontally extending (e.g., along the X-axis) interface. The second angled surface 446 may intersect with the second vertical surface 450 at a horizontally extending (e.g., along the X-axis) interface.

In various embodiments, first angled surface 444 comprises one or more channels 520 extending longitudinally thereon. In various embodiments, channel 520 extends between and to first end 432 and second end 434.

In various embodiments, second angled surface 446 comprises one or more channels 521 extending longitudinally thereon. In various embodiments, channel 521 extends between and to first end 432 and second end 434.

With reference to FIG. 6, the second plug 428 extends longitudinally along a longitudinal centerline 404 of the second plug 428 (e.g., along an X-axis) between and to a first end 452 of the wedge 424 and a second end 454 of the second plug 428. The second plug 428 extends laterally (e.g., along a Y-axis) between and to a first side 456 of the second plug 428 and a second side 458 of the second plug 428. The second plug 428 extends vertically (e.g., along a Z-axis) between and to a bottom side 460 of the second plug 428 and a top side 462 of the second plug 428.

In various embodiments, the first side 456 is shaped to conform to a geometry of a side surface of the female forming tool 420. In various embodiments, the first side 456 comprises a vertical surface. However, first side 456 may be at an angle with respect to a vertical direction depending on the desired shape of the final C/C part. The second side 458 may comprise an angled surface 464 configured to engage (e.g., directly contact) first angled surface 444 whereby preform compressing forces (represented by arrows 492 in FIG. 4A)-e.g., in response to wedge 424 moving (vertically) downward (e.g., in the negative Z-direction)-are transmitted therebetween for moving the second plug 428 in the lateral direction (e.g., along the Y-axis) to compress (e.g., see compression forces represented by arrows 494 in FIG. 4A) a sidewall 418 of the fibrous preform 410. The preform compressing force 492 transmitted between wedge 424 and second plug 428 may further move the second plug 428 in the vertical direction (e.g., in the negative Z-direction) to compress (e.g., see compression forces represented by arrows 496 in FIG. 4A) a bottom wall 417 of the fibrous preform 410. Angled surface 464 may be oriented at a non-parallel angle θ with respect to the vertical direction (e.g., the Z-direction). Angled surface 464 may extend between and to the top side 462 and the bottom side 460 of second plug 428. The first plug 426 may be structurally similar to the second plug 428. The first plug 426 may exhibit a mirrored geometry with that of the second plug 428.

In various embodiments, angled surface 464 comprises one or more channels 522 extending longitudinally thereon. In various embodiments, channel 522 extends between and to first end 452 and second end 454. In various embodiments, channel 522 interfaces with channel 520 of wedge 424 to form one or more of temperature control channels 530 (see FIG. 4A). In this regard, channel 520 may define a first half of temperature control channel 530 and channel 522 may define a second half of temperature control channel 530.

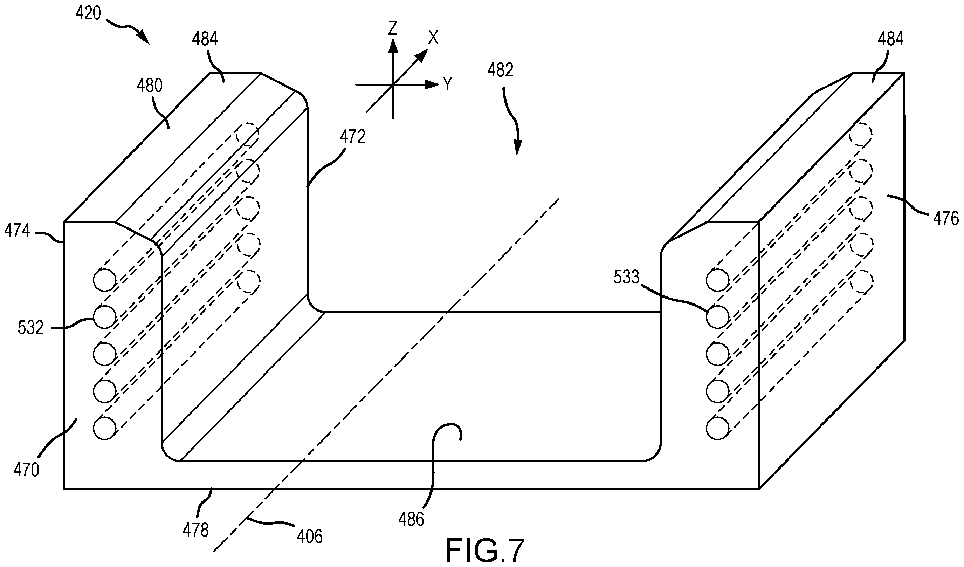

With reference to FIG. 7, the female forming tool 420 extends longitudinally along a longitudinal centerline 406 of the female forming tool 420 (e.g., along X-axis) between and to a first end 470 of the female forming tool 420 and a second end 472 of the female forming tool 420. The female forming tool 420 extends laterally (e.g., along a Y-axis) between and to a first side 474 of the female forming tool 420 and a second side 476 of the female forming tool 420. The female forming tool 420 extends vertically (e.g., along a Z-axis) between and to a bottom side 478 of the female forming tool 420 and a top side 480 of the female forming tool 420.

The female forming tool 420 is configured with at least one die recess 482; e.g., an aperture such as a pocket, a channel, a groove, etc. The die recess 482 of FIG. 7 extends (e.g., partially) vertically into the female forming tool 420 from one or more top surfaces 484 of the female forming tool 420 to a recess surface 486 of the female forming tool 420, where the top surfaces 484 of FIG. 7 are arranged on opposing sides of the recess surface 486 at the female forming tool top side 480. The die recess 482 of FIG. 7 extends longitudinally in (e.g., through) the female forming tool 420, for example, between and to the female forming tool first end 470 and/or the female forming tool second end 472. The die recess 482 of FIG. 7 extends laterally in (e.g., within) the female forming tool 420, for example, between opposing lateral sides of the recess surface 486.

The recess surface 486 is a concave or concave-convex surface and may have a curved geometry; e.g., a three-dimensional (3D) curvature. The recess surface 486 of FIG. 7, for example, has a curved (e.g., arcuate, splined, etc.) cross-sectional geometry in a lateral-vertical reference plane; e.g., a Y-Z plane. The recess surface 486 of FIG. 7 also has a curved (e.g., arcuate, splined, etc.) cross-sectional geometry in a longitudinal-vertical reference plane; e.g., a X-Z plane. This recess curvature may change as the recess surface 486 / the die recess 482 extends laterally and/or longitudinally, which may provide the recess surface 486 with a complex 3D curvature. In embodiments, the recess curvature may remain uniform as the recess surface 486 / the die recess 482 extends laterally and/or longitudinally. The recess surface 486 may be configured without any sharp corners or sharp transitions.

In various embodiments, female forming tool 420 comprises one or more temperature control channels 532 disposed therein. Temperature control channels 532 may be disposed at or near first side 474. Temperature control channels 532 may extend between and to first end 470 and second end 472. In various embodiments, female forming tool 420 comprises one or more temperature control channels 533 disposed therein. Temperature control channels 533 may be disposed at or near second side 476. Temperature control channels 533 may extend between and to first end 470 and second end 472.

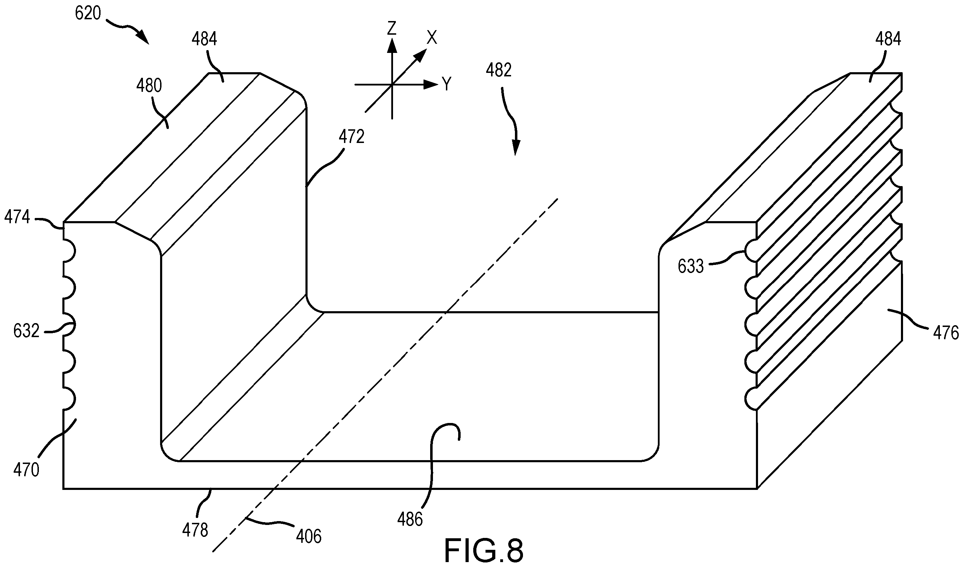

With reference to FIG. 8, a female forming tool 620 is illustrated, in accordance with various embodiments. Female forming tool 620 may be similar to female forming tool 420. With respect to FIG. 8, elements with like element numbering, as depicted in FIG. 7, are intended to be the same and will not necessarily be repeated for the sake of clarity. Female forming tool 620 comprises one or more temperature control channels 632 disposed in an outer surface thereof (e.g., at first side 474). Temperature control channels 632 may extend between and to first end 470 and second end 472. In various embodiments, female forming tool 620 comprises one or more temperature control channels 633 disposed in an outer surface thereof (e.g., at second side 476). Temperature control channels 633 may extend between and to first end 470 and second end 472.

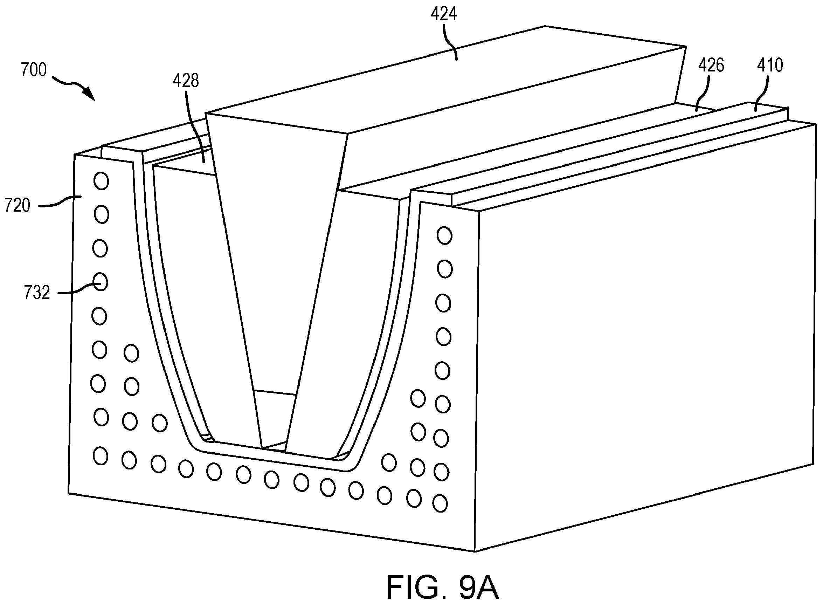

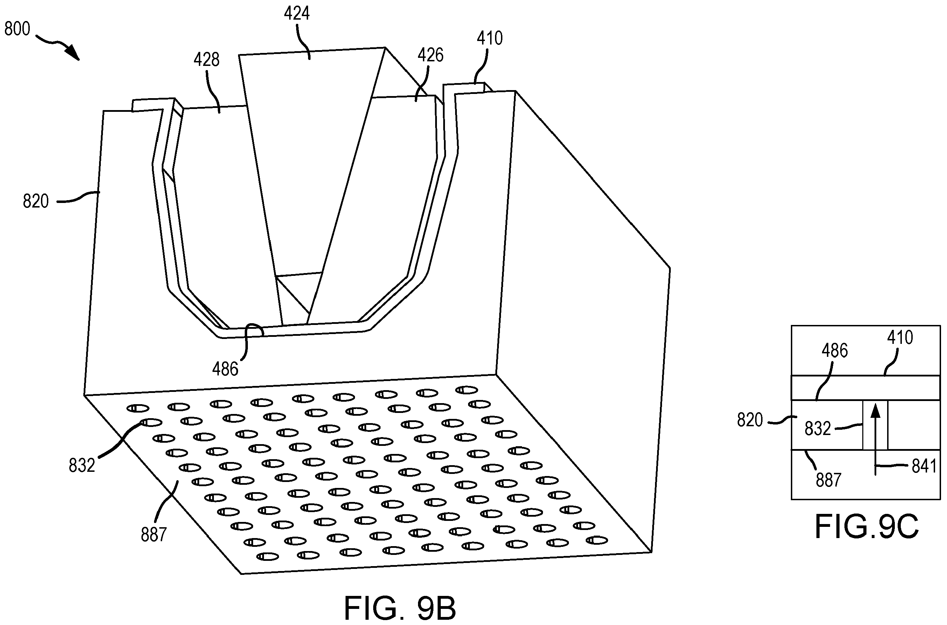

With reference to FIG. 9A, a heat treatment tooling fixture arrangement 700 for carbonization compression and shaping a fibrous preform 410 is illustrated, in accordance with various embodiments. With respect to FIG. 9A and FIG. 9B, elements with like element numbering, as depicted in FIG. 4A, are intended to be the same and will not necessarily be repeated for the sake of clarity. Female forming tool 720 comprises one or more temperature control channels 732 disposed therein. The temperature control channels 732 may be arranged similar to any of the temperature control channels described herein.

In various embodiments, temperature control channels 732 can be disposed (e.g., machined) in low-stress areas of the female forming tool 720. A geometry of the temperature control channels 732 may be dependent on the desired cooling.

In various embodiments, a density of the temperature control channels 732 may be dependent on the geometry of the temperature control channels 732. For example, in the illustrated geometry, there may be more temperature control desirable around the corners/radii of the part as compared to other regions. In this regard, a density of the temperature control channels 732 may vary as desired. Providing a variable density of temperature control channels tends to maintain a uniform exotherm across the preform 410 in accordance with various embodiments.

In various embodiments, creating a thermal gradient during carbonization, and controlling where shrinkage is occurring, tends to create additional, controllable tension/strain in the preform as different regions are shrinking.

With reference to FIG. 9B, a heat treatment tooling fixture arrangement 800 for carbonization compression and shaping a fibrous preform 410 is illustrated, in accordance with various embodiments. Female forming tool 820 comprises one or more temperature control channels 832 disposed at a bottom surface 887 (e.g., where the female forming tool 820 sits against the furnace) thereof. The temperature control channels 832 may be arranged similar to any of the temperature control channels described herein. With momentary reference to FIG. 9C, one or more of the temperature control channels 832 may extend through female forming tool 820 to recess surface 486. In this manner, one or more temperature control channels 832 may direct a temperature control fluid 841 directly onto the preform 410. Stated differently, one or more temperature control channels 832 may be in fluid communication with preform 410. In this manner, one or more temperature control channels 832 may direct the temperature control fluid 841 directly onto the preform 410 in various embodiments (to apply direct heating or cooling to the preform 410, rather than relying on temperature control via the female forming tool 820).

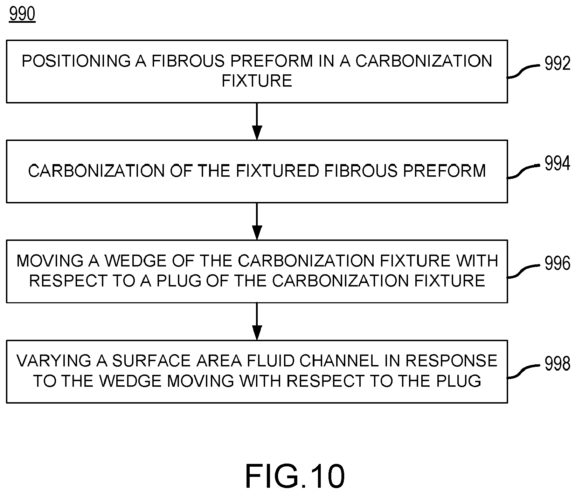

FIG. 10 is a flow chart for a method 990 for controlling exotherms during a carbonization process of a fibrous preform, in accordance with various embodiments. For ease of description, the method 990 is described below with reference to FIG. 4A and FIG. 4B. The method 990 of the present disclosure, however, is not limited to use of the exemplary heat treatment tooling fixture arrangement 400 of FIG. 4A and FIG. 4B.

In step 992, the fibrous preform 410 is provided and installed in heat treatment tooling fixture arrangement 400. Fibrous preform 410 may be configured as a multi-layered preform. The preform 410, for example, may include a stack of a plurality of layers of material. This stack includes the top layer of material at / forming a top side of the fibrous preform 410 and the bottom layer of material at / forming a bottom side of the fibrous preform 410. The stack may also include at least one (or more) intermediate layer of material vertically between the top layer of material and the bottom layer of material. Each layer of material may share a common (e.g., the same) construction and/or material makeup. Each layer of material in the stack, for example, may be formed by a sheet / layer of fibrous material; e.g., non-woven oxidized polyacrylonitrile (PAN) fibers. However, one or more layers of dissimilar construction may also be included (e.g., a non-woven with a chopped fiber mat sacrificial material).

In various embodiments, fibrous preform 410 is shape formed using the heat treatment tooling fixture arrangement 400. In various embodiments, fibrous preform 410 is shape formed prior to being moved to the heat treatment tooling fixture arrangement 400.

The fibrous preform 410 is installed into the heat treatment tooling fixture arrangement 400. The fibrous preform 410 may be pushed down (in the negative Z-direction) to the bottom of the recess surface 486 of the female forming tool 420 (see FIG. 4A) (e.g., by hand, using wedge 424, or the like). Wedge 424, first plug 426, and second plug 428 may move (e.g., downward) vertically from an (e.g., open) position to a (e.g., closed) position. In various embodiments, the first plug 426 and second plug 428 are moved downward to rest on the fibrous preform and the wedge 424 is then moved downward to fit between the first plug 426 and second plug 428. As the first plug 426 and second plug 428 move (e.g., simultaneously or each individually), the first plug 426 and second plug 428 vertically engage a portion of the fibrous preform 410 that overlaps (e.g., spans laterally and longitudinally across) the die recess 482. More particularly, the bottom side 460 vertically presses against the top layer of material. With the wedge 424, first plug 426, and second plug 428 installed over the fibrous preform and at least partially within the die recess 482 (e.g., see FIG. 4A), the wedge 424 may be further moved (e.g., downward) vertically with respect to the female forming tool 420. Wedge 424 may be moved vertically using an apparatus 415, such as a dead weight, a press (e.g., mechanical, pneumatic, hydraulic, heated platen, etc.), or the like. As the wedge 424 continues to vertically move to its (e.g., closed) position of FIG. 4B, the wedge transmits a preform compressing force 492 into the first plug 426 and the second plug 428. For example, with particular focus on the second plug, preform compressing force 492 is transmitted via first angled surface 444 of wedge 424 and angled surface 464 of second plug 428, thereby causing the second plug 428 to move in the lateral direction (e.g., along the Y-axis) to compress (e.g., see compression forces represented by arrows 494 in FIG. 4A) a sidewall 418 of the fibrous preform 410 and also causing the second plug 428 to move (e.g., downward) in the vertical direction (e.g., along the Z-axis) to compress (e.g., see compression forces represented by arrows 496 in FIG. 4A) a bottom wall 417 of the fibrous preform 410. Although described with respect to second plug 428, it should be understood that wedge 424 similarly engages first plug 426 (e.g., with similar forces mirrored about the Z-axis). As the wedge 424 continues to vertically move to its (e.g., closed) position of FIG. 4B, the first plug 426 and second plug 428 (and in various embodiments the wedge 424) collectively shape the preform 410 to conform to (e.g., take the shape of) the recess surface 486. The fibrous preform 410 is press formed (e.g., stamped) into a shaped body 416 between the wedge 424, first plug 426, second plug 428 and the recess surface 486 of female forming tool 420. Stated differently, pressing wedge 424 between and against the first plug and the second plug in a first direction (e.g., the negative Z-direction) causes the first plug 426 and the second plug to move in a second direction (e.g., along the Y-axis) substantially perpendicular to the first direction.

As the wedge 424 continues to vertically move to its (e.g., closed) position of FIG. 4B, the top side 442 may eventually become flush with the top sides of first plug 426 and second plug 428. When the top side 442 is flush with the top sides of first plug 426 and second plug 428, the apparatus 415 may contact to top sides of first plug 426 and second plug 428 (in addition to the top side 442 of wedge 424) and simultaneously move all three of wedge 424, first plug 426, and second plug 428. In this manner, the bottom sides of all three of wedge 424, first plug 426, and second plug 428 may be simultaneously pressed against the top layer of material of the fibrous preform 410, thereby shaping and compressing the fibrous preform into the shaped body 416. In this regard, total vertical dimensions (e.g., a height; i.e., along the Z-axis) of the wedge 424, the first plug 426, and the second plug 428 may be the same. In various embodiments, three discrete apparatus may be provided to press each of wedge 424, first plug 426, and second plug 428, respectively.

Moreover, as the wedge 424 continues to vertically move to its (e.g., closed) position, the first plug 426 and the second plug 428 may be moved laterally outward (see FIG. 4B) to accommodate the increasing width of the wedge 424, thereby compressing and shaping the sidewalls 418 of the fibrous preform into the shaped body 416.

In step 994, the fibrous preform 410 undergoes a carbonization process, as described herein. In step 996, and during the carbonization process, wedge 424 may be moved vertically with respect to first plug 426 and/or second plug 428 (e.g., as the fibrous preform is compressed and/or shrinks), for example using apparatus 415. As wedge 424 moves vertically with respect to first plug 426 and/or second plug 428, first angled surface 444 may translate with respect to angled surface 464. In this manner, channel 520 may translate with respect to channel 522. In step 998, the surface area of temperature control channel 530 is varied in response to this translation of channel 520 with respect to channel 522 (i.e., in response to wedge 424 moving with respect to second plug 428). In a first position (e.g., see FIG. 4A) channel 520 and channel 522 may define a first temperature control channel 530 having a first geometry. However, as channel 520 moves with respect to channel 522, the geometry of temperature control channel 530 may be altered (e.g., see FIG. 4B). In this manner, channel 520 and channel 522 may be machined onto the interfacing surfaces of the wedge 424 and plug 428, respectively, such that cooling the surface area of temperature control channel 530 varies via the translation of the wedge 424 during the carbonization process (e.g., as the fibrous preform 410 shrinks during carbonization and/or as the wedge 424 is pressed downward with respect to second plug 428 with apparatus 415). In various embodiments, in response to the wedge 424 moving to a first position with respect to the plug 428 (e.g., see FIG. 4A), the channel 520 and the channel 522 define a first fluid flow path (i.e., temperature control channel 530 as illustrated in FIG. 4A) comprising a first surface area. In various embodiments, in response to the wedge 424 moving to a second position with respect to the plug 428 (e.g., see FIG. 4B), the channel 520 and the channel 522 define a second fluid flow path (i.e., temperature control channel 530 as illustrated in FIG. 4B) comprising a second surface area different from the first surface area. In various embodiments, the surface area of temperature control channel 530 decreases (thus, slowing tool heating when exposed to the hot ambient furnace air) via the translation of the wedge 424 through the carbonization process. In this manner, one or more temperature control channels 530 may be tailored to vary in surface area as desired to control the heating of wedge 424 and plug 428 via the translation of the middle wedge through the carbonization process. In this manner, the exotherms in fibrous preform 410 may be controlled via temperature control channels 530 (and/or temperature control channels 532, 533) to prevent unwanted wrinkling. In various embodiments, temperature control channels 532, 533 may receive a fluid in a manner as described with respect to FIG. 1 and FIG. 2.

The heat treatment tooling fixture arrangement 400 and its components 420, 424, 426, 428 are described above using the terms "bottom" and "top" with reference to exemplary orientations in the drawings. The present disclosure, however, is not limited to any particular formation system orientations. For example, in other embodiments, the wedge 424, first plug 426, and second plug 428 may alternatively be configured as a bottom die and the female forming tool 420 may alternatively be configured as a top die.

After carbonization, the carbonized shaped body 416 may be densified using chemical vapor infiltration (CVI), as described in further detail below. After carbonization, shaped body 416 may be densified. In various embodiments, the shaped body 416 is removed from graphite fixture 620 prior to densification. In various embodiments, the shaped body 416 is placed in a perforated graphite fixture during one or more densification runs. The shaped body 416 may be densified with pyrolytic carbon by CVI using optimized process conditions to maintain shape and support efficient carbon densification. In general, densification involves filling the voids, or pores, of the fibrous preform with additional carbon material. This may be done using the same furnace used for carbonization or a different furnace. Typically, chemical vapor infiltration and deposition ("CVI/CVD") techniques are used to densify the porous fibrous preform with a carbon matrix. This commonly involves heating the furnace and the carbonized preforms, and flowing hydrocarbon gases (e.g., at least one of methane, ethane, propane, butane, and/or the like, as described herein) into the furnace and around and through the fibrous preforms. In various embodiments, the CVI/CVD process may include a temperature gradient. In various embodiments, the CVI/CVD process may include a pressure gradient. In various embodiments, the CVI/CVD process may include a temperature and a pressure gradient. In various embodiments, additional inert, diluting, and/or inhibiting gases such as argon and hydrogen may be combined with the forementioned reactant gases to control deposition rates and morphology of the deposited compounds.

CVI/CVD densification may be conducted at an elevated temperature for a period of time in the range from about 150 hours to about 650 hours, and in various embodiments, in the range from about 300 hours to about 500 hours (wherein the term about in this context only means +/- 24 hours).

As a result, carbon from the hydrocarbon gases separates from the gases and is deposited on and within the fibrous preforms. Typically, the densification process is continued until the preform reaches a density in the range from 1.6 to 1.9 grams per cubic centimeter (g/cc), and in various embodiments, a density of approximately 1.80 g/cc. When the densification step is completed, the resulting C/C part has a carbon fiber structure with a carbon matrix infiltrating the fiber structure, thereby deriving the name "carbon/carbon."

After a first CVI/CVD cycle of about 300 to about 500 hours, an intermediate heat treat is typically performed, in the same furnace. This heat treat serves to dimensionally stabilize the shaped body 416, increase its thermal properties, and increase its porosity for subsequent densification. The shaped body 416 may then be machined to open the porosity further, to help allow for final density to be achieved using only one more CVI/CVD cycle. Part densities after first machining may be in the range of 1.4 to 1.7 g/cc, depending on the part thickness, overall size, and placement within the furnace. Typical, average density range is 1.55-1.65 g/cc.

The densification process may be continued until the preform reaches a desired density, for example in the range from 1.7 to 1.9 grams per cubic centimeter (g/cc), and in various embodiments, a density of approximately 1.80 g/cc. The CVI/CVD process may be continued with the shaped body 416 removed from the perforated graphite fixture. In this manner, the outer surfaces of the shaped body 416 may be more directly exposed to the gas flow. Moreover, the shaped body 416 may be machined in between carbon CVI densification processes (e.g., between fixtured carbon CVI densification and non-fixtured carbon CVI densification and/or between successive non-fixtured carbon CVI densification processes). Machining (e.g., grinding, sanding, milling, grit blasting, etc.) the shaped body 416 may be performed to achieve a final desired part shape. Machining the shaped body 416 may be performed to expose voids, or pores, of the shaped body 416 so as to facilitate infiltration with additional carbon material during subsequent carbon CVI densification. When the densification step is completed, and the desired density is achieved, the resulting C/C part has a carbon fiber structure with a carbon matrix infiltrating the fiber structure, thereby deriving the name "carbon/carbon."

Following the CVI/CVD densification process, the C/C part may undergo a final heat treatment (FHT) process. This may be done using the same furnace used for densification or a different furnace. If done using the same furnace, the flow of hydrocarbon gases would be stopped following the end of the densification process and the temperature increased. FHT may be conducted in a vacuum or partial vacuum (e.g., at pressures of 1-15 torr) or in an inert atmosphere at an elevated temperature for a period of time in the range from about 4 hours to about 14 hours, and in various embodiments, in the range from about 8 hours to about 12 hours (wherein the term "about" in this context only means +/- 2 hours). In various embodiments, the FHT process imparts high temperature dimensional stability to the final C/C part. In various embodiments, the FHT process imparts desired thermal properties associated with thermal shock such as high thermal conductivity, high heat capacity, and/or high emissivity.

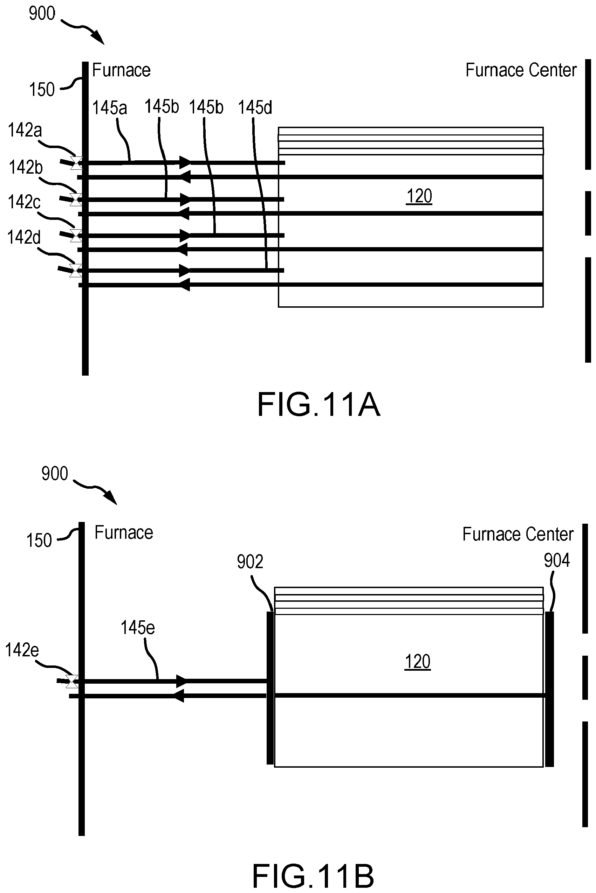

With reference to FIG. 11A, in accordance with various embodiments, is a schematic illustration of an exemplary heat treatment tooling fixture arrangement 900 of the present disclosure. Heat treatment tooling fixture arrangement 900 may be configured for active exotherm control via the female die 120. Heat treatment tooling fixture arrangement 900 includes a plurality of valves (e.g., valve 142a, valve 142b, valve 142c, and valve 142d) for respectively controlling a flow of a temperature control fluid through a plurality of conduits (e.g., conduit 145a, conduit 145b, conduit 145c, conduit 145d). The valves can be located outside of furnace 150 and the conduits can extend into the furnace 150 and interface with the temperature control channels (e.g., see temperature control channels 132 of FIG. 1 for example) of the heat treatment tooling fixture (e.g., female die 120). The temperature control channels can be used to either provide active cooling (to control a uniform exotherm) or active heating (to maintain uniform heating of the tooling assembly in the furnace) to desired regions of the heat treatment tooling fixture arrangement 900. By having individual control points, heat treatment tooling fixture arrangement 900 can tailor when and where shrinkage (via heating and/or cooling) occurs and can mitigate wrinkling and misalignment across the preforms.

In various embodiments, a method of operating heat treatment tooling fixture arrangement 900 may include activating exotherm control after a predetermined time in the carbonization cycle (e.g., 10 minutes, 30 minutes, 1 hour, 4 hours, etc.). After the predetermined duration, a first valve (e.g., valve 142a) can be commanded to open to allow exotherm temperature control (e.g., heating or cooling) to begin. A temperature sensor at the outlet side of the conduit 145a may be monitored to determine a temperature change between the inlet side and the outlet side of conduit 145a to determine whether the exotherm has occurred. Valves 142b, 142c, and 142d can similarly be opened in sequence to control the exotherm across the preform. The valves 142a, 142b, 142c, and 142d can be closed (e.g., in sequence) when the primary exotherm is complete. After exotherm control is complete, all of the valves 142a, 142b, 142c, and 142d can be closed and the preform may finish the carbonization cycle in the furnace 150 without any further active temperature control using the conduits 145a, 145b, 145c, and 145d. In various embodiments, various portions of the method may be performed automatically (e.g., using control unit 144 of FIG. 1). In various embodiments, various portions of the method may be performed manually, wherein a valve flow rate and temperature sensor readouts are read by an operator in a furnace control room.

With reference to FIG. 11B, heat treatment tooling fixture arrangement 900 may be configured for active exotherm control via the male die (e.g., see male die 122 of FIG. 1 and multi-piece wedge and plug arrangement comprising a wedge 424, a first plug 426, and a second plug 428 of FIG. 4A). Heat treatment tooling fixture arrangement 900 includes a valve 142e for controlling a flow of a temperature control fluid through a conduit 145e. The valve 142e can be located outside of furnace 150 and the conduit 145e can extend into the furnace 150 and interface with the temperature control channels (e.g., see temperature control channels 130 of FIG. 1 for example) of the heat treatment tooling fixture (e.g., male die 122). The temperature control channels can be used to either provide active cooling (to control a uniform exotherm) or active heating (to maintain uniform heating of the tooling assembly in the furnace) to desired regions of the heat treatment tooling fixture arrangement 900. By having individual control points, heat treatment tooling fixture arrangement 900 can tailor when and where shrinkage (via heating and/or cooling) occurs and can mitigate wrinkling and misalignment across the preforms.

In various embodiments, a first header 902 is coupled to a first end of the male tool (e.g., see male die 122 of FIG. 1 and multi-piece wedge and plug arrangement comprising a wedge 424, a first plug 426, and a second plug 428 of FIG. 4A) and a second header 904 is coupled to a second end of the male tool. First header 902 may include a single inlet and a plurality of exits to direct fluid from conduit 145e into the temperature control channels of the male die. Second header 902 may include a plurality of inlets (to receive the temperature control fluid from the plurality of temperature control channels in the male die) and a single exit to route the temperature control fluid to return outside of the furnace 150. First head 902 and second header 904 may be made from a graphite/C-C material.

In various embodiments, a method of operating heat treatment tooling fixture arrangement 900 may include activating exotherm control after a predetermined time in the carbonization cycle (e.g., 10 minutes, 30 minutes, 1 hour, 4 hours, etc.). After the predetermined duration, valve 142e can be commanded to open to allow exotherm temperature control (e.g., heating or cooling) to begin. A temperature sensor at the outlet side of the conduit 145e may be monitored to determine a temperature change between the inlet side and the outlet side of conduit 145e to determine whether the exotherm has occurred. A temperature control fluid can be forced through the temperature control channels of the male die via the first header 902 and the second header 904. Temperature control fluid can be directed into a return conduit via the second header 904. The valve 142e can be closed when the primary exotherm is complete. After exotherm control is complete, valve 142e can be closed and the preform may finish the carbonization cycle in the furnace 150 without any further active temperature control using the conduit 145e. In various embodiments, various portions of the method may be performed automatically (e.g., using control unit 144 of FIG. 1). In various embodiments, various portions of the method may be performed manually, wherein a valve flow rate and temperature sensor readouts are read by an operator in a furnace control room.

Systems and methods are provided. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A heat treatment tooling fixture arrangement, comprising:
a heat treatment tooling fixture configured to receive a fibrous preform;
a first temperature control channel disposed in the heat treatment tooling fixture and configured to receive a first fluid for regulating a first temperature of the fibrous preform;
a first temperature sensor configured to measure an inlet temperature of the first fluid entering the first temperature control channel;
a second temperature sensor configured to measure an exit temperature of the first fluid exiting the first temperature control channel; and
a controller configured to receive a first signal from the first temperature sensor and a second signal from the second temperature sensor, wherein the first signal corresponds to the inlet temperature of the first fluid entering the first temperature control channel and the second signal corresponds to the exit temperature of the fluid exiting the first temperature control channel;
wherein the controller is configured to monitor the first signal and the second signal for regulating at least one of:
a flow rate of the first fluid; or
a temperature of the first fluid.

2. The heat treatment tooling fixture arrangement of claim 1, wherein the first fluid comprises an inert gas.

3. The heat treatment tooling fixture arrangement of claim 1 or 2, further comprising a second temperature control channel disposed in the heat treatment tooling fixture and configured to receive a second fluid for regulating a second temperature of the heat treatment tooling fixture.

4. The heat treatment tooling fixture arrangement of claim 3, further comprising a third temperature sensor configured to measure an exit temperature of the second fluid exiting the second temperature control channel.

5. The heat treatment tooling fixture arrangement of claim 4, wherein the controller is configured to:
calculate a difference between the exit temperature of the first fluid exiting the first temperature control channel and the exit temperature of the second fluid exiting the second temperature control channel; and
based upon the difference, regulate the at least one of the flow rate of the first fluid or the temperature of the first fluid.

6. The heat treatment tooling fixture arrangement of any preceding claim, wherein the heat treatment tooling fixture comprises a male die and a female die.

7. A method for controlling exotherms during a carbonization process of a fibrous preform, the method comprising:
positioning the fibrous preform in a heat treatment tooling fixture;
heating the fibrous preform in a furnace while the fibrous preform is positioned in the heat treatment tooling fixture;
moving a first fluid through a first temperature control channel disposed in the heat treatment tooling fixture;
moving a second fluid through a second temperature control channel disposed in the heat treatment tooling fixture;
measuring a first outlet temperature of the first fluid;
measuring a second outlet temperature of the second fluid; and
varying at least one of a flow rate or a temperature of the first fluid based on the first outlet temperature and the second outlet temperature.

8. The method of claim 7, wherein the fibrous preform comprises an oxidized PAN fiber material; and/or
wherein the fibrous preform is heated.

9. The method of claim 7 or 8, further comprising:
measuring an inlet temperature of the first fluid;
calculating a first difference between the first outlet temperature and the inlet temperature;
calculating a second difference between the second outlet temperature and the inlet temperature;
comparing the first difference with the second difference; and
varying the at least one of the flow rate or the temperature of the first fluid based upon the comparison.

10. The method of claim 7, 8 or 9 wherein varying the flow rate of the first fluid comprises sending a position command signal to a valve; and/or
wherein varying the temperature of the first fluid comprises sending a temperature command signal to a heater.

11. A heat treatment tooling fixture arrangement, comprising:
a female forming tool comprising a die recess, the female forming tool extends longitudinally along a longitudinal centerline of the female forming tool between and to a first end of the female forming tool and a second end of the female forming tool, and the female forming tool extends laterally between and to a first side of the female forming tool and a second side of the female forming tool;
a first plug configured to be received by the die recess, the first plug comprising a first angled surface;
a wedge configured to be received by the die recess, the wedge extends longitudinally along a longitudinal centerline of the wedge between and to a first end of the wedge and a second end of the wedge, the wedge extends laterally between and to a first side of the wedge and a second side of the wedge, the first side of the wedge comprises a first tapered surface;
wherein the first tapered surface of the wedge is configured to engage the first angled surface of the first plug;
the first angled surface comprises a first channel extending longitudinally therethrough and the first tapered surface comprises a second channel extending longitudinally therethrough;
wherein:
in response to the wedge moving to a first position with respect to the first plug, the first channel and the second channel form a first temperature control channel defining a first fluid flow path comprising a first surface area; and
in response to the wedge moving to a second position with respect to the first plug, the first channel and the second channel form a second temperature control channel defining a second fluid flow path comprising a second surface area different from the first surface area.

12. The heat treatment tooling fixture arrangement of claim 11, wherein the wedge moves vertically with respect to the first plug when the wedge moves from the first position to the second position.

13. The heat treatment tooling fixture arrangement of claim 12, wherein, in response to the wedge moving from the first position to the second position, the first plug is configured to move laterally toward the first side of the female forming tool.

14. The heat treatment tooling fixture arrangement of claim 11, 12 or 13, further comprising a second plug configured to be received by the die recess, the second plug comprising a second angled surface;
wherein the second side of the wedge comprises a second tapered surface;
and the second tapered surface of the wedge is configured to engage the second angled surface of the second plug; and
in response to the wedge moving from the first position to the second position, the second plug is configured to move laterally toward the second side of the female forming tool; and/or
further comprising a third temperature control channel disposed in the female forming tool, the third temperature control channel configured to receive a fluid during a carbonization process.

15. The heat treatment tooling fixture arrangement of any of claims 11 to 14, wherein the second surface area is less than the first surface area; and/or
wherein the first channel extends between and to a first end of the first plug and a second end of the first plug; and/or
wherein the second channel extends between and to the first end of the wedge and the second end of the wedge.
